# EUROPÄISCHE PATENTSCHRIFT

(11) **EP 1 423 214 B1**
(45) Veröffentlichungstag und Bekanntmachung des Hinweises auf die Patenterteilung: **27.07.2005**
(21) Anmeldenummer: 02797927.7
(22) Anmeldetag: 28.08.2002
(51) Int. Cl.: B21B 45/02, B21B 1/28, B21B 1/36

(54) **KOMBINIERTE VERWENDUNG VON ÖL UND EMULSION BEIM KALTWALZEN VON BÄNDERN**
COMBINED USE OF OIL AND EMULSION FOR THE COLD-ROLLING OF STRIPS
UTILISATION COMBINEE D'HUILE ET D'EMULSION POUR LE LAMINAGE A FROID DE BANDES

(30) Priorität: 05.09.2001 DE 10143407
(43) Veröffentlichungstag der Anmeldung: 02.06.2004
(73) Patentinhaber: SMS Demag Aktiengesellschaft, 40237 Düsseldorf (DE)
(72) Erfinder: BÜNTEN, Rolf, 52074 Aachen (DE); EFFERTZ, Rainer, 40489 Düsseldorf (DE)
(74) Vertreter: Valentin, Ekkehard
(86) Internationale Anmeldenummer: PCT/EP2002/009570
(87) Internationale Veröffentlichungsnummer: WO 2003/022474

(56) Entgegenhaltungen:
- US-B1- 6 189 358
- PATENT ABSTRACTS OF JAPAN vol. 2000, no. 07, 29. September 2000 (2000-09-29) & JP 2000 094026 A (NKK CORP), 4. April 2000 (2000-04-04)

## Beschreibung

Die Erfindung betrifft ein Verfahren zum Kaltwalzen von Bändern unter anderem aus Edelstählen und/oder Nichteisen-Metallen in einer mehrgerüstigen Tandemstraße, wobei das erste bzw. die ersten Gerüst(e) vergleichsweise hohe Abnahmen fahren und das letzte bzw. die letzten Gerüst(e) bei relativ geringer Abnahme die Oberflächenqualität des Bandes bestimmen. Die Erfindung betrifft auch eine Anlage zur Durchführung des Verfahrens.

Bei Kaltwalzprozessen von Bändern werden einerseits für das Walzgut möglichst hohe Stichabnahmen bei vergleichsweise geringen Anforderungen an die Qualität der Produktoberfläche und andererseits für das Finish-Produkt eine optimale spezifische Oberflächenbeschaffenheit bei relativ geringer Reduktion angestrebt. Um dieses Ziel zu erreichen, war in der Walztechnik bislang vorgesehen, nur ein Schmier- und Kühlmittel (Emulsion oder Öl)einzusetzen, wobei bei verschiedenen Walzprogrammen Kompromisse in Kauf genommen werden mußten.

Walzöl besitzt als Kaltwalzschmiermittel Schmiereigenschaften, die um den Faktor 1,3 besser sind als bei einer Emulsion. Zusammen mit ausgewählten Additiven ergibt dieses Öl immer einen homogenen Film auf der Bandoberfläche, der vorteilhaft zur einwandfreien Trennung von Bandoberfläche und umformender Walze führt. Die resultierende Bandoberfläche ist daher äußerst homogen und von feiner Struktur, der erzielbare Oberflächenglanz ist hoch. Walzöl ist zwar relativ teuer, jedoch leicht zu handhaben, so dass bei geringem Pflegeaufwand eine annähernd unbegrenzte Standzeit erreicht wird.

Jedoch besitzt Walzöl den entscheidenden Nachteil, dass es ein sehr schlechtes Wärmeleitmedium darstellt und ebenso geringe Wärmekapazität aufweist. Dies führt im Walzprozeß zu erhöhten Temperaturen in Band und Walze, wodurch die Arbeitswalzen im ungünstigen Fall Grenztemperaturen erreichen und das Band selbst Anlaßfarben aufweist. Aufgrund geringer Kühlwirkung verläuft die Planheitsregelung über die Zonenkühlung weniger gut als bei Verwendung von Medien mit höherer Kühlwirkung.

Durch Einsatz von Emulsion als Walzhilfsmittel kann zwar der Nachteil der schlechten Kühlwirkung von Walzöl zumindest teilweise aufgehoben werden. Die Schmierwirkung einer Emulsion wird im wesentlichen durch die Tröpfchengröße und durch die Verseifungszahl bestimmt. Jedoch ist die Homogenität der Schmierung erheblich schlechter, weshalb zur Erzielung einer einigermaßen zufriedenstellenden Schmierung das verwendete Emulsionsöl besondere Substanzen aufweisen muß. Diese beiden Eigenschaften und Schwierigkeiten resultieren in einer weniger guten Oberflächenqualität. Weiterhin ist die Filtrierbarkeit einer Emulsion, bedingt durch die Größe der Öltröpfchen, begrenzt. Um eine Phasentrennung zu vermeiden, ist eine Fein- bzw. Feinstfiltration nicht durchführbar, was zu negativen Auswirkungen auf die Bandoberfläche führt.

Unter Abwägung der spezifischen Eigenschaften der unterschiedlichen Schmier- und Kühlmedien ergibt sich bei Tandemstraßen für die Erzeugung hochwertiger Edelstaht-Kaltwalzbänder die Konsequenz, nach neuen Wegen zu suchen, um höchste Qualität der Bandoberflächen zu gewährleisten.

Das Dokument WO 98/51 423 beschreibt eine Tandem-Walzstraße mit zwei Gerüsten für die Produktion von Stahl - Dünnband bis 0,18 mm. Diese Gerüste erreichen eine Reduktion von üblicherweise 50 bis 60 %. Zum Erreichen einer weiteren Reduktion folgt ein finaler Kaltwalz-Durchgang. Dennoch gelingt es damit nicht, einen bestimmten Grenzwert der Dicke zu unterschreiten, weil damit die Produktqualität geringwertig und unbefriedigend ausfällt.

Die bekannte Anlage weist in Anpassung an den jeweiligen Betriebszustand ein erstes Schmiermittel-System und ein sekundäres Schmiermittel-System auf, die alternativ zugeschaltet werden. Durch unterschiedliche Kreisläufe mit separaten Tanks soll keine Vermischung der Schmiermittelfluide stattfinden. Jeder Tank besitzt eigene Mittel zum Kontrollieren und Auffüllen des Flüssigkeitsspiegels, sowie eigene Mittel zum Überwachen der Komposition des Schmiermittels. Entsprechend einer Variante sind die Kontrollmittel für die Komposition des Schmiermittels begleitet von Mitteln zur wenigstens teilweisen Ergänzung der physikalisch/chemischen Charakteristika der Schmiermittel. Es sind Bemessungseinrichtungen für Substanzen wie Schmieröl, Additive, Impfstoffe, etc. vorgesehen, wobei die Bemessungseinrichtungen geeignet sind, die Schmiermittel-Charakteristika zu ergänzen oder wieder herzustellen. Durch Rührvorrichtungen wird eine stets gleichförmige Konzentration der Schmiermittel-Flüssigkeit aufrecht erhalten, um Ablagerungen und Verunreinigungen zu vermeiden. Der Hinweis auf "Concentration of oil in the lubrication mixture" läßt erkennen, dass bei diesem Verfahren an die Verwendung von Emulsionen mit unterschiedlichen Konzentrationen gedacht war. Die alternative Verwendung von homogenen monodispersen Walzöfen ist nicht Gegenstand dieses Dokuments.

Das Dokument 770 573 der Union der Sozialistischen Sowjetrepubliken (UdSSR) beschreibt ein Verfahren zum Walzen und Dressierwalzen auf einer 2-gerüstigen Walzstraße, welches eine Umformung des Metalls mit einer Abnahme im ersten Gerüst von 40 bis 60 % und im zweiten Gerüst auf bis zu 5 % mit Schmierung und Walzenkühlung umfaßt. Zur Steigerung der Leistungsfähigkeit des Prozesses, zur Senkung des Energieaufwandes für die Umformung und zur Erzielung einer hohen Qualität und Oberflächenreinheit des Walzbandes erfolgt die Schmierung und Kühlung nur im ersten Gerüst, wobei als Schmiermittel eine Emulsion aus hochviskosen Mineralölen mit einer Konzentration bis 1 %, und als Kühlmittel eine wässrige Tensidlösung mit einer Konzentration bis 0,001 Mol/l zum Einsatz kommt, und vor und nach dem zweiten Gerüst eine Waschlösung auf das Band aufgebracht wird.

Ausgehend vom vorgenannten Stand der Technik liegt der Erfindung die Aufgabe zugrunde, ein Verfahren und eine entsprechende Anlage zu dessen Durchführung anzugeben, durch welche beim Kaltwalzen von Bändern aus Edelstahl und/oder Nichteisen-Metallen eine deutliche Steigerung der Leistungsfähigkeit des Walzprozesses mit gleichzeitiger Verbesserung der Kühlung von Band und Walze, sowie eine Optimierung der Oberflächengüte des Endproduktes, d. h. des gewalzten Bandes, erzielt wird.

Zur Lösung der Aufgabe wird bei einem Verfahren der im Oberbegriff von Anspruch 1 genannten Art mit der Erfindung vorgeschlagen, dass für die ersten Durchläufe des Bandes durch die Tandemstraße mit relativ hoher Reduktion als Kühl- und Schmiermittel eine Emulsion verwendet wird, der anhaftende Kühl- und Schmiermitteffilm vom Band nach Austritt aus dem Walzspalt des Walzgerüstes abgequetscht, und für insbesondere den oder die letzten Durchläufe des Bandes durch die Tandemstraße mit relativ geringer Reduktion Walzöl als Schmiermittel verwendet wird. Durch den Einsatz von Emulsionen wird die Kühlwirkung in den ersten Reduktionsstufen der Walzstraße angehoben. Durch den Einsatz von Walzöl in der letzten Reduktionsstufe der Walzstraße wird die Oberflächenerscheinung des Walzbandes deutlich verbessert. Insgesamt wird eine deutliche Steigerung der Leistungsfähigkeit einer Walzstraße erzielt.

Weiter sieht eine Ausgestaltung der Erfindung vor, dass unterschiedliche Kühl- und Schmiermittel wie heterogene Gemische in Form von Emulsionen bzw. ein monodisperses Medium in Form von Walzöl nach Maßgabe der Performance des Walzprozesses wechselweise verwendet werden.

Hierfür ist es nach der Erfindung erforderlich, dass für die Verwendung von Emulsionen bzw. von Walzöl zwei getrennte Anlagenteile aus zwei jeweils kompletten, eigenständigen Systemen unter weitestgehender Vermeidung einer Vermischung der unterschiedlichen Kühl- und Schmiermittel eingesetzt werden.

Eine Anlage zum Kaltwalzen von Bändern unter anderem aus Edelstahl und/oder Nichteisen-Metallen, umfassend eine mehrgerüstige Tandemstraße besteht im wesentlichen aus zwei autarken Kühlmittel- und Schmiermittelsystemen, einer Emulsionsanlage mit Behältern, Systempumpen, Kühlem und Unterdruck- bzw. Druckbandfiltern sowie aus einer Walzölanlage, enthaltend die vorgenannten Anlagenkomponenten, wobei die Filter rückspülbare Feinstfilter sind, um im Hinblick auf die äußerst hohen Anforderungen der Walzbandoberflächengüte höchste Filtratreinheit zu erzielen.

Da das letzte(die letzten) Gerüst(e) der Tandemstraße sowohl mit Emulsion als auch mit Walzöl gefahren werden kann (können), wird erfindungsgemäß ferner vorgeschlagen, dass dem letzten Gerüst bzw. den letzten Gerüsten der Tandemstraße separate Spritzbalken für jeweils Emulsion oder Walzöl zugeordnet sind.

Weitere Einzelheiten, Merkmale und Vorteile der Erfindung ergeben sich aus der nachstehenden Erläuterung eines in der Zeichnung schematisch dargestellten Ausführungsbeispiels.

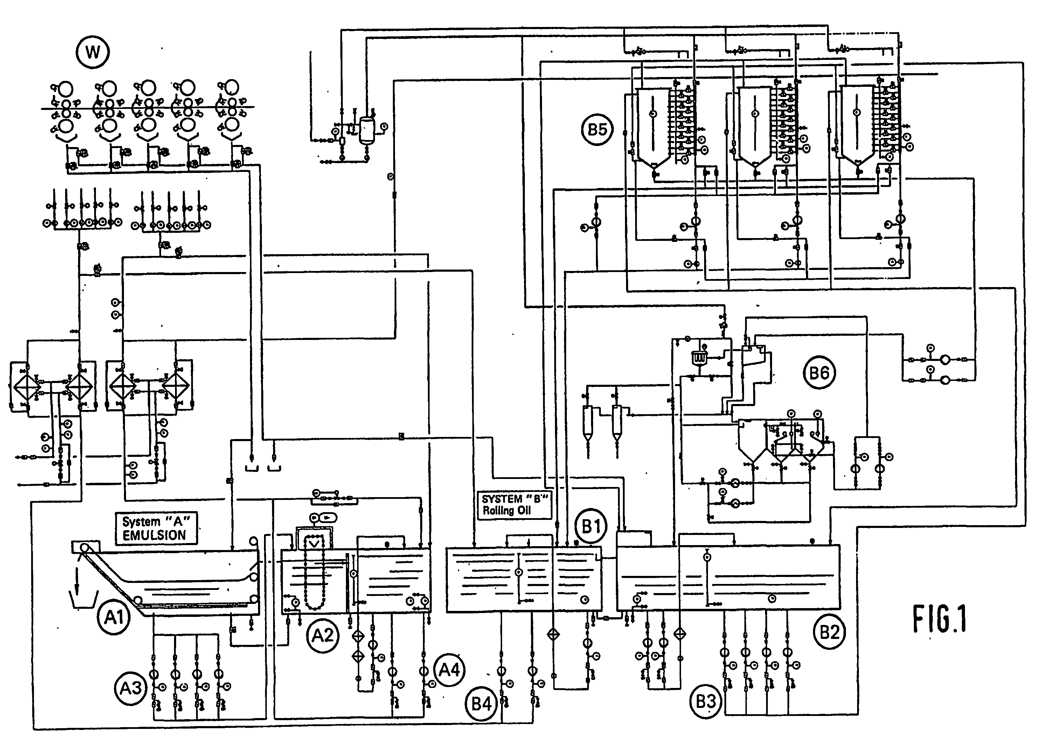

Die Figur 1 zeigt in Form eines Verfahrensschemas eine Anlage für kombinierten Auftrag von Emulsion und Öl bei einer 5-gerüstigen Tandem-Kaltwalzanlage mit der Walzstraße W. Die Kühl- und Schmiermittelanlage umfaßt mit der Bezeichnung "System A" die darin enthaltene Walzemulsionsanlage mit dem Unterdruckfilter A1, dem Walzemulsions-Reinbehälter mit Magnetabscheider A2 sowie mit den Vakuum-Filterpumpen A3 und den Systempumpen A4. Die Walzemulsionsanlage "System A" ist allen fünf Walzgerüsten der Walzstraße zugeordnet.

Mit der Bezeichnung "Systeme B" ist die Walzölanlage mit dem Reinölbehälter B1 und dem Schmutzölbehälter B2 ersichtlich, ferner sind die Filterpumpen B3, die Systempumpen B4, das Feinstfiltersystem B5 sowie die Sekundärfilteranlage B6 zu erkennen. Die Walzölanlage ist nur dem letzten Gerüst bzw. den letzten Gerüsten der Tandemstraße zugeordnet. Diesen letzten Gerüsten können zwei nicht näher gezeichnete verschiebbare Auffangwannen zugeordnet sein, die eine für Emulsion und die andere für Walzöl, je nach dem, ob die letzten Walzgerüste mit Emulsion oder mit Walzöl gefahren werden.

Mit der Erfindung wird die Möglichkeit eröffnet, in Tandemstraßen, die heute immer häufiger für die Erzeugung auch von Edelstahl eingesetzt werden, die ersten Gerüste, die in der Regel eine hohe Abnahme fahren und damit hohe Wärmeeinträge im Band erzeugen, mit Emulsion zu betreiben. Die Abquetschung der Emulsion vom Band hinter den emulsionsbetriebenen Gerüsten erfolgt bis auf maximale Restölbestände von beispielsweise max. 220 mg/m². Das Walzband tritt nunmehr in die letzten Walzgerüste der Walzstraße bzw. in deren letztes Gerüst ein. Diese Gerüste werden mit Walzöl betrieben und mit geringerer Reduktion gefahren. Auf diese Weise wird die Oberfläche veredelt und metallisch glänzend und genügt daher den heutigen hohen Anforderungen an die Oberflächen kalt gewalzter Bänder.

Das erfindungsgemäße Verfahren ist sowohl bei mehrgerüstigen beispielsweise mit 5 bis 7 Gerüsten ausgestatteten Tandemstraßen als auch bei zweigerüstigen reversierenden Tandemstraßen wie auch bei eingerüstigen Reversierstraßen mit Erfolg einsetzbar.

## Patentansprüche

1. Verfahren zum Kaltwalzen von Bändern unter anderem aus Edelstählen und/oder Nichteisen-Metallen in einer mehrgerüstigen Tandemstraße, wobei das erste bzw. die ersten Gerüst(e) vergleichsweise hohe Abnahmen fahren und das letzte bzw. die letzten Gerüst(e) bei relativ geringer Abnahme die Oberflächenqualität des Bandes bestimmen,
**dadurch gekennzeichnet,**
**dass** für die ersten Durchläufe des Bandes durch die Tandemstraße mit relativ hoher Reduktion als Kühl- und Schmiermittel eine Emulsion verwendet wird, der anhaftende Kühl- und Schmiermittelfilm vom Band nach Austritt aus dem Walzspalt abgequetscht wird und für insbesondere den oder die letzten Durchläufe des Bandes durch die Tandemstraße mit relativ geringer Reduktion Walzöl als Schmiermittel verwendet wird.

2. Verfahren nach Anspruch 1,
**dadurch gekennzeichnet,**
**dass** das Abquetschen hinter den emulsionsbetriebenen Walzgerüsten der Tandemstraße auf Restölbestände von max. 150 bis 300 mg/m² erfolgt.

3. Verfahren nach Anspruch 1 oder 2,
**dadurch gekennzeichnet,**
**dass** unterschiedliche Kühl- und Schmiermittel wie heterogene Gemische in Form von Emulsionen, bzw. ein monodisperses Medium in Form von Walzöl nach Maßgabe der Performance des Walzprozesses wechselweise verwendet werden.

4. Verfahren nach einem der Ansprüche 1 bis 3,
**dadurch gekennzeichnet,**
**dass** bei Verwendung von Emulsionen und von Walzöl zwei getrennte Anlagenteile aus zwei jeweils kompletten, eigenständigen Systemen unter weitestgehender Vermeidung einer Vermischung der unterschiedlichen Kühl- und Schmiermittel eingesetzt werden.

5. Anlage zum Kaltwalzen von Bändern unter anderem aus Edelstahl und/oder Nichteisen-Metallen, umfassend eine mehrgerüstige Tandemstraße, zur Durchführung des Verfahrens nach der Erfindung,
**gekennzeichnet durch,**
- im wesentlichen zwei autarke Kühlmittel- und Schmiermittelsysteme,
- eine Emulsionsanlage mit Behältern, Systempumpen, Kühlem und Unterdruck bzw. Druckbandfiltem,
- eine Walzölanlage, enthaltend die vorgenannten Komponenten, wobei die Filter rückspülbare Feinstfilter sind.

6. Anlage nach Anspruch 5,
**dadurch gekennzeichnet,**
**dass** die Emulsionsanlage für das erste bzw. die ersten Gerüst(e) vorgesehen ist und dass dem letzten Gerüst bzw. den letzten Gerüsten der Tandemstraße sowohl eine Emulsionsanlage als auch eine Walzölanlage zugeordnet ist.

7. Anlage nach Anspruch 5 oder 6,
**dadurch gekennzeichnet,**
**dass** dem letzten Gerüst oder den letzten Gerüsten der Tandemstraße separate Spritzbalken für jeweils Emulsion oder Walzöl zugeordnet sind.

8. Anwendung des kombinierten Auftrags von Emulsion und Walzöl nach einem der Ansprüche 1 bis 4 auf eine zweigerüstige reversierende Tandemstraße.

9. Anwendung des kombinierten Auftrags von Emulsionen und Walzöl nach einem der Ansprüche 1 bis 4 auf eingerüstige Reversierstraßen

## Claims

1. Method of cold rolling strips of inter alia high-quality steels and/or non-ferrous metals in a multi-stand tandem rolling train, wherein the first stand or the first stands conducts or conduct comparatively high reductions and the last stand or last stands determines or determine, with a relatively small reduction, the surface quality of the strip, **characterised in that** an emulsion is used as cooling and lubricating medium for the first passes of the strip through the tandem rolling train with relatively high reduction, the adhering cooling and lubricating medium film is squeezed off the strip after exit from the rolling gap and rolling oil is used as lubricant for, in particular, the last pass or last passes of the strip through the tandem rolling train with relatively small reduction.

2. Method according to claim 1, **characterised in that** the squeezing off takes place behind the emulsion-operated rolling stands of the tandem rolling train to residual oil states of at most 150 to 300 mg/m².

3. Method according to claim 1 or 2, **characterised in that** different cooling and lubricating media such as heterogeneous mixtures in the form of emulsions or a monodisperse medium in the form of rolling oil are alternatively used according to the performance of the rolling process.

4. Method according to one of claims 1 to 3, **characterised in that** in the case of use of emulsions and of rolling oil two separate plant parts respectively of two complete independent systems are employed substantially with avoidance of intermixing of the different cooling and lubricating media.

5. Plant for cold rolling strips of inter alia high-quality steel and/or non-ferrous metals, comprising a multi-stand tandem rolling train, for carrying out the method according to the invention, **characterised by**
- substantially two autonomous coolant and lubricant systems,
- an emulsion plant with containers, system pumps, coolers and underpressure or pressure strip filters, and
- a rolling oil plant, containing the aforesaid components, wherein the filters are very fine filters able to be back-flushed.

6. Plant according to claim 5, **characterised in that** the emulsion plant is provided for the first stand or first stands and that both an emulsion plant and a rolling oil plant are associated with the last stand or the last stands of the tandem rolling train.

7. Plant according to claim 5 or 6, **characterised in that** separate spray bars respectively for emulsion and rolling oil are associated with the last stand or the last stands of the tandem rolling train.

8. Use of combined application of emulsion and rolling oil according to one of claims 1 to 4 on a reversing tandem rolling train with two stands.

9. Use of combined application of emulsions and rolling oil according to one of claims 1 to 4 on reversing rolling trains with a single stand.

## Revendications

1. Procédé pour le laminage à froid de bandes, entre autres en aciers nobles et/ou en métaux non ferreux, dans un laminoir tandem à plusieurs cages, la ou les premières cages réalisant des réductions relativement élevées et la ou les dernières cages à une réduction relativement faible déterminant la qualité de surface de la bande, **caractérisé en ce qu'**on utilise, pour le premier passage de la bande dans le laminoir tandem avec une réduction relativement élevée, comme agent de refroidissement et lubrifiant, une émulsion, on enlève par écrasement le film adhérent d'agent de refroidissement et de lubrifiant de la bande à la sortie de la fente de laminage et on utilise en particulier pour le ou les derniers passages de la bande dans le laminoir tandem avec une réduction relativement faible de l'huile de laminage comme lubrifiant.

2. Procédé selon la revendication 1, **caractérisé en ce que** l'élimination par écrasement en aval des cages de laminage fonctionnant avec une émulsion du laminoir tandem est réalisée jusqu'à des charges d'huile résiduelle d'au maximum 150 à 300 mg/m².

3. Procédé selon la revendication 1 ou 2, **caractérisé en ce que** les différents agents de refroidissement et lubrifiants, tels que les mélanges hétérogènes sous forme d'émulsions ou un agent monodispersé sous forme d'huile de laminage, sont utilisés alternativement en fonction des performances du processus de laminage.

4. Procédé selon l'une quelconque des revendications 1 à 3, **caractérisé en ce que** lors de l'utilisation d'émulsions et d'huile de laminage, deux parties d'installation séparées constituées par à chaque fois deux systèmes autonomes, complets sont utilisées en évitant le plus possible un mélange des différents agents de refroidissement et des lubrifiants.

5. Installation pour le laminage à froid de bandes, entre autres en acier noble et/ou en métaux non ferreux, comprenant un laminoir tandem à plusieurs cages, pour réaliser le procédé selon l'invention, **caractérisée par**
- essentiellement deux systèmes autonomes à agent de refroidissement et de lubrifiant,
- une installation à émulsion avec des récipients, des pompes, des refroidisseurs et une dépression ou des filtres à bande à pression,
- une installation à huile de laminage, comprenant les composants susmentionnés, les filtres étant des filtres fins pouvant être lavés en retour.

6. Installation selon la revendication 5, **caractérisée en ce que** l'installation à émulsion est prévue pour la ou les premières cages de laminage et une installation à émulsion ainsi qu'une installation à huile de laminage sont associées à la ou aux dernières cages de laminage du laminoir tandem.

7. Installation selon la revendication 5 ou 6, **caractérisée en ce que** des barres de pulvérisation séparées pour à chaque fois l'émulsion ou l'huile de laminage sont associées à la ou les dernières cages de laminage du laminoir tandem.

8. Utilisation de l'application combinée d'émulsion et d'huile de laminage selon l'une quelconque des revendications 1 à 4 sur un laminoir tandem réversible à deux cages de laminage.

9. Utilisation de l'application combinée d'émulsions et d'huile de laminage selon l'une quelconque des revendications 1 à 4 sur des laminoirs réversibles à une cage de laminage.
